Europäisches Patentamt

European Patent Office

Office européen des brevets

(11) Veröffentlichungsnummer: **0 428 938 A2**

## (12) EUROPÄISCHE PATENTANMELDUNG

(21) Anmeldenummer: **90121326.4**

(22) Anmeldetag: **07.11.90**

(51) Int. Cl.⁵: **G06F 15/16**

(30) Priorität: **17.11.89 DE 3938316**

(43) Veröffentlichungstag der Anmeldung:
**29.05.91 Patentblatt 91/22**

(84) Benannte Vertragsstaaten:
**DE FR GB IT NL**

(71) Anmelder: **Siemens Aktiengesellschaft**
**Wittelsbacherplatz 2**
**W-8000 München 2(DE)**

(72) Erfinder: **von Zitzewitz, Andreas**
**Erlenstrasse 6**
**W-8091 Maitenbeth(DE)**

(54) **Mehrprozessorsystem.**

(57) Mehrprozessorsystem mit einer Anzahl von autonomen Prozessoreinheiten, mit einer Steuereinheit, mit einer globalen Speichereinheit, mit einem globalen Bus, an dem die Prozessoreinheiten, die Steuereinheit und die globale Speichereinheit angeschlossen sind, wobei die Prozessoreinheiten untereinander und/oder mit an den globalen Bus angeschlossenen Peripherieeinheiten ausschließlich über die globale Speichereinheit kommunizieren.

FIG 1

EP 0 428 938 A2

## MEHRPROZESSORSYSTEM

Die Erfindung betrifft ein Mehrprozessorsystem.

Die digitale Verarbeitung analoger Signale in Echtzeit gewinnt immer mehr an Bedeutung. Mit der Komplexität der verwendeten Algorithmen steigen jedoch auch die Anforderungen an die Rechenleistung von digitalen Systemen, da ein vollständiger Programmdurchlauf innerhalb einer relativ kurzen Abtastperiode erfolgen muß. Daneben erwartet ein Anwender aber auch hohe Rechengeschwindigkeit, Kostengünstigkeit, gute Entwicklungsunterstützung und hohe Flexibilität vom Signalverarbeitungsrechner. Integrierte digitale Signalprozessoren, wie sie sich bereits zahlreich am Markt befinden, zeichnen sich durch sehr günstige Kosten, die den Einsatz in industriellen Massenprodukten ermöglichen, sowie durch eine ausgezeichnete Entwicklungsunterstützung aus. Auf dem Chip integrierte Hardware-Multiplizierer, sehr kurze Zykluszeiten sowie ein spezialisierter Befehlsatz verbunden mit großer Wortlänge garantieren eine hohe Verarbeitungsleistung, die jedoch für viele komplexe Algorithmen nicht ausreicht.

Aus I. Brazda, G. Niedrist, Mehrfach-Signal-Prozessor-System, Berichte der Informationstagung Mikroelektronik 87, Mikroelektronik, Wien Oktober 1987, ist nun eine Anordnung aus mehreren Prozessoreinheiten, einem Timer, einer Ablaufsteuerung, einer Analog-Ein/Ausgabeeinheit, einem Host-Rechner und einem Host-Interface bekannt. Die einzelnen Einheiten sind durch ein Netzwerk miteinander verbunden, das durch zwei voneinander unabhängige, asynchrone, parallele Busse realisiert ist, auf denen Daten im Zeitmultiplexbetrieb übertragen werden. Alle Einheiten sind über ein standardisiertes Interface an das Verbindungsnetzwerk angekoppelt. Die Anzahl der verwendeten Prozessor- und Ein/Ausgabe-Einheiten kann an die jeweiligen Erfordernisse angepaßt werden. Das System arbeitet nach einem Datenflußkonzept, das bedeutet, daß Teilprozesse erst dann gestartet werden, wenn alle nötigen Eingangsdaten vorhanden sind. Eine exakte Synchronisierung der Teilprozesse durch den Anwender entfällt somit. Die Datentransfers werden mit doppelter Pufferung durchgeführt, d.h., daß vom Sender Daten in ein Register geschrieben werden, die durch die Ablaufsteuerung über die Busse zu einem Register beim Empfänger übertragen werden. Die Ablaufsteuerung ist als ringförmiger Speicher organisiert, der von einem Zähler adressiert wird und vom Host-Rechner mit einem Ablaufplan geladen werden kann. Die Ausgangsdaten des Speichers werden als Abfrage-Signale für die am jeweiligen Transfer beteiligten Einheiten verwendet. Erst wenn diese eine Bereit-Meldung an die Ablaufsteuerung abgegeben haben, wird der Datentransfer ausgelöst. Ist die im Ablaufplan vorgemerkte Anzahl von Transfers durchgeführt, wird der Adreßzähler inkrementiert. Nach dem letzten Transfer eines Programmdurchlaufs wird der Zähler rückgesetzt und ein neuer Durchlauf kann beginnen. Entsprechend den zwei voneinander unabhängigen Bussen ist die Ablaufsteuerung in zwei voneinander unabhängige Teilsteuerungen aufgeteilt. Der Timer ist frei programmierbar und für die Erzeugung der Abtastraten vorgesehen. Der Host-Rechner steuert durch direkten Zugriff auf die Ablaufsteuerung das Gesamtsystem, während über das Host-Interface Programme und Daten zu den einzelnen Prozessoreinheiten übertragen werden.

Der benötigte Hardware-Aufwand, der zusätzlich zu den Prozessoreinheiten und dem Host-Rechner notwendig ist, ist jedoch relativ hoch. Insbesondere die Notwendigkeit zweier Busse bedingt sowohl bei der Realisierung der Busse selbst als auch bei der Ablaufsteuerung einen erheblichen Aufwand.

Aufgabe der Erfindung ist es daher, ein Mehrprozessorsystem mit geringerem Aufwand anzugeben.

Diese Aufgabe wird erfindungsgemäß durch ein Mehrprozessorsystem entsprechend Patentanspruch 1 gelöst. Ausgestaltungen und Weiter bildungen des Erfindungsgedankens sind in Unteransprüchen gekennzeichnet.

Vorteile der Erfindung sind:
Eine geringere Verlustleistung aufgrund des geringeren Schaltungsaufwandes,
eine übersichtliche Kommunikation zwischen den Prozessoreinheiten und dadurch eine einfache Programmierung des Gesamtsystems, eine einfache Realisierung von Systemen mit mehreren Abtastraten und
ein schnellerer Zugriff auf globale Variable durch alle Prozessoreinheiten.

Die Erfindung wird nachfolgend anhand des in den FIG der Zeichnung dargestellten Ausführungsbeispiels näher erläutert. Es zeigt

FIG 1 ein prinzipielles Ausführungsbeispiel eines erfindungsgemäßen Mehrprozessorsystems in einem Blockschaltbild und

FIG 2 den Kommunikationsablauf der Prozessoreinheiten in einem Diagramm.

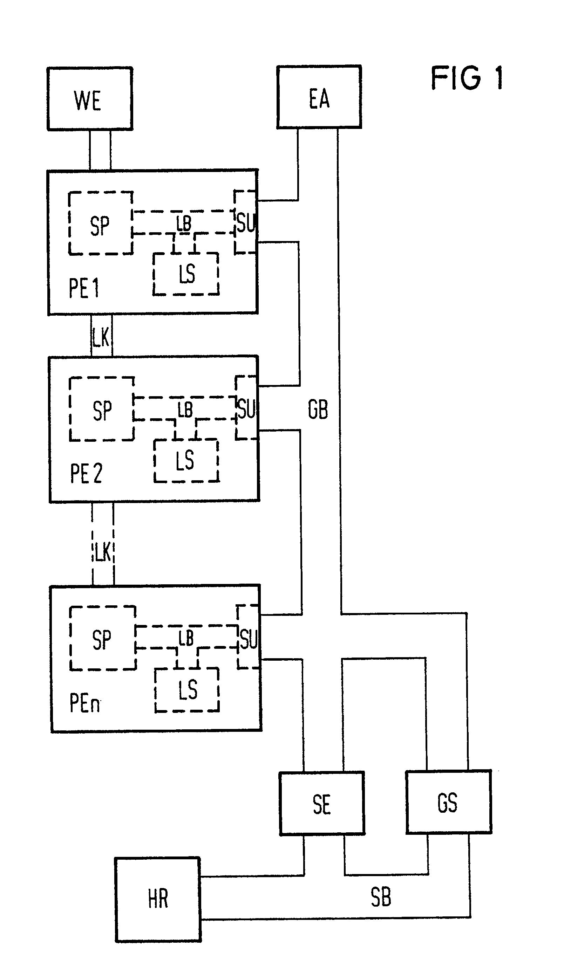

Bei dem Ausführungsbeispiel gemäß FIG 1 sind n Prozessoreinheiten PE1...PEn vorgesehen. Diese weisen jeweils einen Signalprozessor SP, einen lokalen Bus LB und einen lokalen Speicher LS auf. Über eine Schnittstelle SU sind die Prozessoreinheiten PE1...PEn jeweils mit einem globalen Bus GB verbunden. An den globalen Bus GB sind darüber hinaus eine Steuereinheit SE, ein globaler Speicher GS sowie eine Ein/Ausgabe-Einheit EA angeschlossen. Der globale Bus GB führt Datensignale, Adreßsignale, Interrupt-Signale, Steuersignale und ein Taktsignal. Im vorliegenden Ausführungsbeispiel sind alle Prozessoreinheiten PE1...Pn identisch aufgebaut. In gleicher Weise ist aber auch der Betrieb mit unterschiedlichen Prozessoreinheiten möglich, sofern diese eine entsprechende Schnittstelle SU aufweisen. Die Prozessoreinheiten PE1...PEn sind dabei jeweils so ausgeführt, daß sie völlig autonom arbeiten können (lokaler Bus LB, lokaler Speicher LS). Das heißt, daß die Prozessoreinheiten PE1...PEn jeweils für sich ein völlig funktionsfähiges System bilden. Die Kommunikation der Prozessoreinheiten PE1...PEn erfolgt ausschließlich über den globalen Speicher GS, der eine gemeinsame externe Speichererweiterung darstellt. Daten für bzw. von anderen Prozessoreinheiten und Informationen von der Ein/Ausgabe-Einheit EA werden dort abgelegt bzw. ausgelesen. Die Reihenfolge des Zugriffs der einzelnen Prozessoreinheiten PEI.. .PEn und/oder der Ein/Ausgabe-Einheit EA als Peripherieeinheit auf die globale Speichereinheit GS wird durch die Steuereinheit SE festgelegt. Diese signalisiert einer Prozessoreinheit die Zugriffsberechtigung dann, wenn die zuletzt zugreifende Prozessoreinheit das Ende des Zugriffs angezeigt hat.

In Weiterbildung der Erfindung ist ein Host-Rechner mit Steuereinheit SE und globaler Speichereinheit GS über einen zusätzlichen Bus, im folgenden mit Steuerbus bezeichnet, verbunden. Eine Besonderheit hierbei ist, daß die globale Speichereinheit GS als Dual-Port-RAM ausgelegt ist, d.h., daß der Host-Rechner HR und die jeweils zugriffsberechtigte Prozessoreinheit PE gleichzeitig auf diesen Speicher zugreifen können. Eine Ausnahme stellt dabei das gleichzeitige Schreiben in dieselbe Zelle dar. Hier erhält die zugriffsberechtigte Prozessoreinheit Priorität und der Host-Rechner HR muß warten. Der Host-Rechner HR ist bei entsprechender Softwareunterstützung in der Prozessoreinheit dadurch in der Lage, im Betrieb sämtliche Speicherzellen der Prozessoreinheiten PE1...PEn, also Signale, Zustandsvariable, Koeffizienten und Ähnliches, zu lesen und auszuwerten. Auch können jederzeit globale Statusvariablen verändert werden. Damit ist es möglich, daß zum einen das Mehrprozessorsystem auch während des Betriebs steuerbar und jederzeit beobachtbar ist.

Die Steuereinheit SE übernimmt dabei zwei Aufgaben. Im Ruhezustand des Systems, d.h., wenn keine der Prozessoreinheiten PE1...PEn aktiv ist, wird durch entsprechende Programmierung der Zugriff des Host-Rechners HR auf alle Prozessoreinheiten PE1...PEn ermöglicht, d. h. er kann beispielsweise direkt, also ohne Benutzung der globalen Speichereinheit, auf die lokalen Speicher LS zugreifen. Es können also die jeweiligen Programme der Prozessoreinheiten PE1...PEn gelesen werden und beispielsweise für den Fall, daß die Prozessoreinheiten PE1...PEn über flüchtige Programmspeicher verfügen, auch Programme geladen werden und/oder sämtliche Speicherzellen und Register verändert werden. Ebenso kann auch die Reihenfolge des Zugriffs der Prozessoreinheiten PE1...PEn auf die globale Speichereinheit GS durch Ändern des Ablaufprogramms der Steuereinheit SE variiert werden, sofern die Steuereinheit SE über flüchtige Speicher verfügt. Dazu werden durch den Host-Rechner HR keine Steuerdaten in der Steuereinheit SE abgelegt. Da jeweils nur eine der Prozessoreinheiten PE1...PEn auf die globale Speichereinheit GS zugreifen kann, werden die Adressen der Prozessoreinheiten PE1...PEn in der gewünschten Reihenfolge in der Steuereinheit SE abgelegt. Darüber hinaus kann der Host-Rechner HR auch Daten an die Prozessoreinheiten PE1...PEn senden bzw. von diesen Daten empfangen. Der Datenaustausch erfolgt über die globale Speichereinheit GS und entsprechender Steuerung über die Steuereinheit SE.

Eine weitere Möglichkeit eines Datenaustausches zwischen peripheren Einheiten und den Prozessoreinheiten PE1...PEn ist durch direkte Verbindung einer entsprechenden Peripherieeinheit, beispielsweise einer Analog-Digital- und Digital-Analog-Wandler einheit WE, an eine Prozessoreinheit, im gezeigten Ausführungsbeispiel an die Prozessoreinheit PEI, gegeben. Dadurch wird erreicht, daß externe Daten, die nur eine Prozessoreinheit betreffen, nicht über den globalen Bus GB übertragen werden müssen und dieser dadurch weniger belastet wird.

Die Erfindung weiterbildend sind in dem Ausführungsbeispiel gemäß FIG 1 jeweils benachbarte Prozessoreinheiten über lokale Kommunikationskanäle LK miteinander verbunden. Auch durch diese Maßnahme wird erreicht, daß der globale Bus GB geringer belastet wird, indem Daten, die nur zwei benachbarte Prozessoreinheiten betreffen, nicht über den globalen Bus GB übermittelt werden.

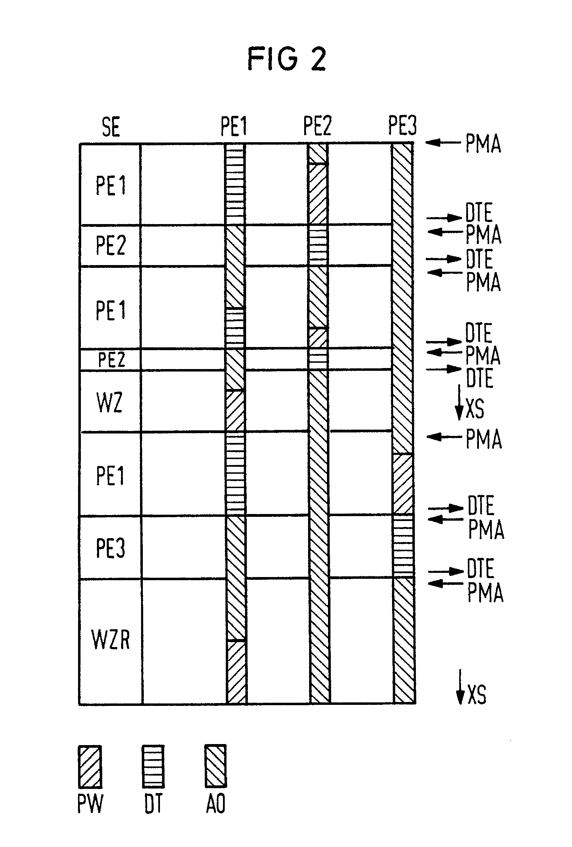

In FIG 2 der Zeichnung ist nun der Ablauf der Kommunikation dreier Prozessoreinheiten PE1,PE2,PE3 über die globale Speichereinheit SE bei entsprechendem Ablaufprogramm der Steuereinheit SE in einem Diagramm aufgezeigt. Das Ablaufprogramm der Steuereinheit SE sieht zunächst einen Zugriff der Prozessoreinheit PE1 auf die globale Speichereinheit GS vor und signalisiert dies der Prozessoreinheit PE1 mit einem Signal PMA. Daraufhin führt die Prozessoreinheit PE1 den Datentransfer DT durch. Parallel dazu werden in der Prozessoreinheit PE2 zunächst arithmetische Operationen A0 ausgeführt und anschließend in einen Wartezustand PW übergegangen, während die Prozessoreinheit PE3 während des gesamten Abschnittes mit arithmetischen Operationen A0 beschäftigt ist. Das Ende des Datentransfers DT wird der Steuereinheit SE mit einer Daten-Transfer-Endemeldung DTE durch die Prozessoreinheit PE1 angezeigt. Daraufhin gibt die Steuereinheit SE an die Prozessoreinheit PE2 das Signal PMA aus. Der Datentransfer DT zwischen der Prozessoreinheit PE2 und der globalen Speichereinheit GS beginnt. Die Prozessoreinheiten PE1 und PE2 sind dabei mit arithmetischen Operationen A0 beschäftigt. Das Ende des Datentransfers DT wird wiederum durch eine Daten-Transfer-Endemeldung DTE, diesmal allerdings durch die Prozessoreinheit PE2 abgegeben, beendet. Damit erhält wiederum die Prozessoreinheit PE1 programmgemäß die Zugriffsberechtigung. Diese hat jedoch ihre arithmetischen Operationen A0 noch nicht beendet. Nach Beendigung der arithmetischen Operationen A0 geht die Prozessoreinheit PE1 sofort zum Datentransfer DT über. Während der Phase der Zugriffsberechtigung der Prozessoreinheit PE1 führt die Prozessoreinheit PE3 und die Prozessoreinheit PE2 arithmetische Operationen A0 aus, wobei die Prozessoreinheit PE2 sich teilweise im Wartezustand PW befindet. Nach Erhalt der Daten-Transfer-Endemeldung DTE ermächtigt die Steuereinheit SE nun die Prozessoreinheit PE2 zum Zugriff, die sofort mit der Ausführung beginnt, während die Prozessoreinheiten PE1 und PE3 arithmetische Operationen A0 ausführen. Nach Abschluß des Datentransfers DT sieht das Ablaufprogramm nun einen Zustand WZ vor, bei dem keine der drei Prozessoreinheiten PE1...PE3 eine Zugriffsberechtigung erhält. Die Prozessoreinheiten sind während dieser Phase mit arithmetischen Operationen A0 beschäftigt bzw. im Wartezustand PW. Der Wartezustand WZ kann beispielsweise dazu benutzt werden, um peripheren Einheiten den Zugriff auf die globale Speichereinheit GS zu ermöglichen, wobei das Ende des Zugriffs durch ein externes, durch die jeweilige periphere Einheit abgegebenes Signal XS angezeigt wird. Der Zustand WZ kann aber auch zur Synchronisation mit externen Ereignissen, beispielsweise zur Synchronisation mit gegebenen Abtastzeitpunkten, angewendet werden. Das jeweilige externe Ereignis wird dabei durch ein jeweiliges externes Signal XS angezeigt, worauf die Ausführung des Ablaufprogramms fortgeführt wird. Im gezeigten Ausführungsbeispiel bedeutet dies, daß nun wieder die Prozessoreinheit PE1 die Zugriffsberechtigung zur globalen Speichereinheit GS und anschließend die Prozessoreinheit PE3 erhält. Die beiden jeweils anderen Prozessoreinheiten PE2,PE3 bzw. PE1, PE2 führen dabei wiederum arithmetische Operationen A0 durch bzw. befinden sich im Wartezustand PW.

Nach Beendigung des Datentransfers DT durch die Prozessoreinheit PE3, also nach Erhalt der Daten-Transfer-Endemeldung DTE, ist beispielsweise das von der Steuereinheit SE abzuarbeitende Ablaufprogramm beendet. Die Steuereinheit SE geht nun in einen Wartezustand WZR über. Während dieser Phase sind weiterhin die Prozessoreinheiten P1...PE3 mit arithmetischen Operationen A0 beschäftigt bzw. befinden sich im Wartezustand PW. Je nach Programmierung sind nun zwei Möglichkeiten vorgesehen: Eine Möglichkeit besteht darin, daß die Steuereinheit SE nun selbsttätig das Programm erneut startet oder aber als zweite Möglichkeit, daß die Steuereinheit SE wiederum erst beim Auftreten eines externen Signals XS einen erneuten Programmstart durchführt. Durch die Option Warten auf die nächste Abtastperiode mit oder ohne Rücksetzen (Zustand WZ oder Zustand WZR) ist die Realisierung von Systemen mit verschiedenen Abtastraten sehr einfach.

Wie aus dem gezeigten Ausführungsbeispiel zu ersehen ist, zeichnet sich ein erfindungsgemäßes Mehrprozessorsystem durch folgende vorteilhafte Kriterien aus:

1. Durch einen modularen Aufbau ist ein Erweitern des Systems leicht durchzuführen, im einfachsten Fall ist dazu nur ein Duplizieren der Prozessoreinheiten notwendig.

2. Durch eine universelle Schnittstelle bei den autonomen Prozessoreinheiten wird eine Implementierung andersartiger Prozessoreinheiten bzw. von Prozessoreinheiten mit Signalprozessoren der nächsten Generationen ermöglicht;

3. eine komfortable Steuer- und Beobachtbarkeit ist auch während des Betriebs mittels eines Host-Rechners gegeben;

4. durch eine übersichtliche Kommunikation zwischen den Prozessoreinheiten ist eine einfache Programmierung des Gesamtsystems gegeben;

5. Die Realisierung von Systemen mit mehreren Abtastraten ist auf einfache Weise möglich;

6. geringer schaltungstechnischer Aufwand;

7. geringe Verlustleistung;

8. Integrierbarkeit des gesamten Systems.


## Ansprüche

1. Mehrprozessorsystem

mit einer Anzahl von autonomen Prozessoreinheiten (PE1...PEn), mit einer ein gegebenes Ablaufprogramm abarbeitenden Steuereinheit (SE), mit einer globalen Speichereinheit (GS) und mit einem globalen Bus (GB), an dem die Prozessoreinheiten (PE1...PEn), die Steuereinheit (SE) und die globale Speichereinheit (GS) angeschlossen sind,

wobei die Prozessoreinheiten (PE1...PEn) untereinander und/oder mit an den globalen Bus (GB) angeschlossenen Peripherieeinheiten (EA) ausschließlich über die globale Speichereinheit (GS) kommunizieren.

2. Mehrprozessorsystem nach Anspruch 1,
**dadurch gekennzeichnet,**
daß die Reihenfolge des Zugriffs der Prozessoreinheiten (PE1...PEn) und/oder der Peripherieeinheiten (EA) auf die globale Speichereinheit (GS) durch die Steuereinheit (SE) gemäß dem gegebenen Ablaufprogramm festgelegt wird.

3. Mehrprozessorsystem nach Anspruch 2,
**dadurch gekennzeichnet,**
daß der Zugriff einer anderen Prozessoreinheit auf die globale Speichereinheit (GS) erst dann zugelassen wird, wenn der Steuereinheit (SE) von der zuletzt zugreifenden Prozessoreinheit das Ende des Zugriffs signalisiert worden ist.

4. Mehrprozessorsystem nach einem der Ansprüche 1 bis 3,
**gekennzeichnet durch**
einen Host-Rechner (HR), der mit Steuereinheit (SE) und globaler Speichereinheit (GS) über einen zusätzlichen Bus (SB) verbunden ist.

5. Mehrprozessorsystem nach einem der Ansprüche 1 bis 4, **dadurch gekennzeichnet,**
daß jeweils benachbarte Prozessoreinheiten über lokale Kommunikationskanäle (LK) miteinander verbunden sind.

6. Mehrprozessorsystem nach einem der Ansprüche 1 bis 5,
**dadurch gekennzeichnet,**
daß weitere Peripherieeinheiten (WE) jeweils an die Prozessoreinheiten (PE1) direkt angeschlossen sind.

7. Mehrprozessorsystem nach einem der Ansprüche 1 bis 6,
**dadurch gekennzeichnet,**
daß die Steuereinheit (SE) am Ende ihres Ablaufprogramms und nach Beendigung der Verarbeitung durch die Prozessoreinheiten (Pe1...PEn) das Ablaufprogramm erneut startet.

8. Mehrprozessorsystem nach Anspruch 7,
**dadurch gekennzeichnet,**
daß der erneute Start des Ablaufprogramms von externen Signalen abhängig ist.

9. Mehrprozessorsystem nach einem der Ansprüche 1 bis 8,
**dadurch gekennzeichnet,**
daß die Ausführung des Ablaufprogramms an einer bestimmten Stelle des Ablaufprogramms unterbrochen wird und abhängig von externen Signalen fortgeführt wird.

10. Mehrprozessorsystem nach einem der Ansprüche 1 bis 9,
**dadurch gekennzeichnet,**
daß der globale Speicher (GS) als Dual-Port-RAM ausgeführt ist.

FIG 1

EP 0 428 938 A2

# FIG 2

7